# EUROPEAN PATENT SPECIFICATION

(11) **EP 2 152 575 B1**
(45) Date of publication and mention of the grant of the patent: **16.05.2012**
(21) Application number: 07867015.5
(22) Date of filing: 12.03.2007
(51) Int. Cl.: B64C 27/12, B64D 47/06, H01L 41/113

(54) **ROTOR BLADE VISUAL LIGHTS**
SICHTBARE LEUCHTEN FÜR ROTORBLÄTTER
LUMIÈRES VISUELLES DE PALE DE ROTOR

(43) Date of publication of application: 17.02.2010
(73) Proprietor: Bell Helicopter Textron Inc., Hurst, TX 76053 (US)
(72) Inventor: LANDRY, Martin, Quebec, J7Y 4W3 (CA)
(74) Representative: Freeman, Avi
(86) International application number: PCT/US2007/006149
(87) International publication number: WO 2008/111932

(56) References cited:
- EP-A- 0 947 423
- EP-A- 1 227 335
- DE-A1- 10 356 230
- US-A- 2 555 807
- US-A- 3 723 722
- US-A- 5 690 408
- US-A- 5 801 475
- US-A1- 2004 075 363

## Description

### 1. Field of the Invention

The present application relates to an autonomous lighting device, and more particularly, to an autonomous lighting device for providing indications of the proximity of a rotor blade of a helicopter.

### 2. Description of Related Art

Various devices are currently used to illuminate the blades of a helicopter. For example, illumination of the rotor blades can be done by attachment of a chemiluminescent light stick to the tips of the blades. The chemiluminescent light provides an indication of the position of the rotor blade's tips. However, this system must generally be loaded prior to each use. In addition, it is not possible to selectively turn the device on and off in flight.

EP-A-0947423 discloses a helicopter blade end lighting device comprising an LED and a power source. US-A-5,801,475 discloses a piezo-electric electricity generation device for an earthquake alarm or for attaching to livestock or a domestic animal. US-A-2004/0075363 discloses an energy harvesting device including structural members covered with piezo-electric material. US-A-2,555,807 discloses wing tip lights for rotary winged aircraft.

### SUMMARY

In an embodiment of the invention, there is provided a rotor blade of a rotorcraft comprising a light emitting device configured to provide light on a rotor blade, the light emitting device including: a light emitting diode arranged on the rotor blade; and a power source connected to the light emitting diode, the power source including a piezo-electric material sandwiched between two electrodes, and; an optical fiber configured to guide light emitted by the light emitting diode to a desired location in the rotor blade; wherein the piezo-electric material is configured and positioned on the rotor blade to create a voltage between the two electrodes due to vibrations of the rotor blade to power the light emitting diode.

### BRIEF DESCRIPTION OF THE DRAWINGS

Embodiments of the invention will now be described, by way of example only, with reference to the accompanying drawings in which corresponding reference symbols indicate corresponding parts, and in which

FIGS. 1a-b are schematic representations of a rotor blade of a helicopter

FIG. 2 shows a top view of several substantially identical rotor blades mounted to the rotor mast assembly of a helicopter;

FIG. 3 shows a lighting device mounted to the outboard end or tip of the blade ;

FIG. 4 shows a lighting device mounted to the outboard end or tip of the blade in ;

FIG. 5 shows a schematic representation of a self-powered lighting device;

### DETAILED DESCRIPTION

Embodiments of the present invention are directed to an autonomous lighting device that is configured to provide indications as to the proximity and the position of the rotor blades of a helicopter. The lighting device may be mounted to the tips or other regions of the blades of the main rotor and/or the tail rotor. The lighting device is configured to provide reliable illumination during night and/or day operations in high vibration or movement locations.

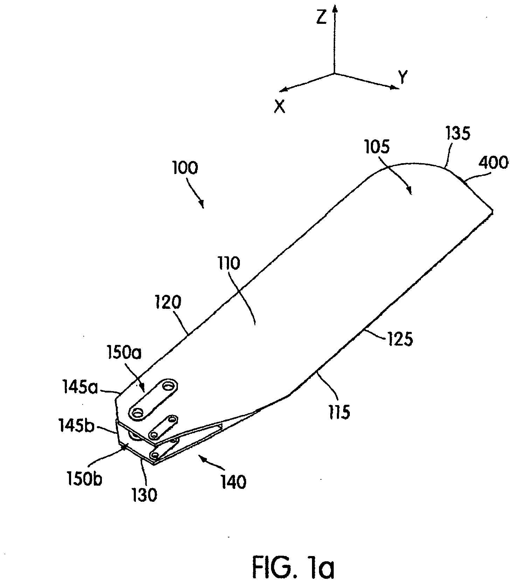

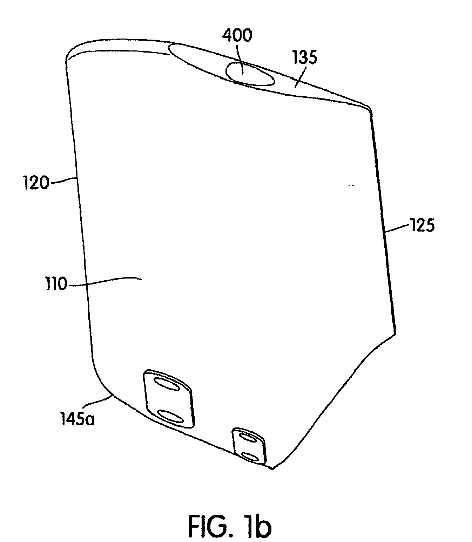

FIGS. 1a-b are schematic representations of a rotor blade 100 of a helicopter (not shown). Rotor blade 100 includes a body 105 having a suction face 110 and a pressure face 115 opposite the suction face 110. The rotor blade 100 also includes a leading edge 120, a trailing edge 125, and an inboard and an outboard end 130, 135. The leading edge 120 and the trailing edge 125 define the longitudinal contour of the body 105 and extend between the inboard end 130 and the outboard end or tip of the blade 135. The body 105 of the rotor blade 100 has a tapering profile, as viewed in plane XZ, along the longitudinal direction of the blade 100 that extends from the inboard end 130 to the outboard end 135.

As known in the art, when the rotor blade 100 is moved through the air, a stream of air flows over the suction surface 110 and under the pressure surface 115. The rotor blade 100 is designed so that the flow of air is smooth and conforms to the shape of the moving rotor blade 100. When the rotor blade 100 is set at the proper angle and made to move fast enough, the airflow supports the weight of the rotor blade 100 and provides a upward force that furnishes enough lift to sustain the helicopter in flight.

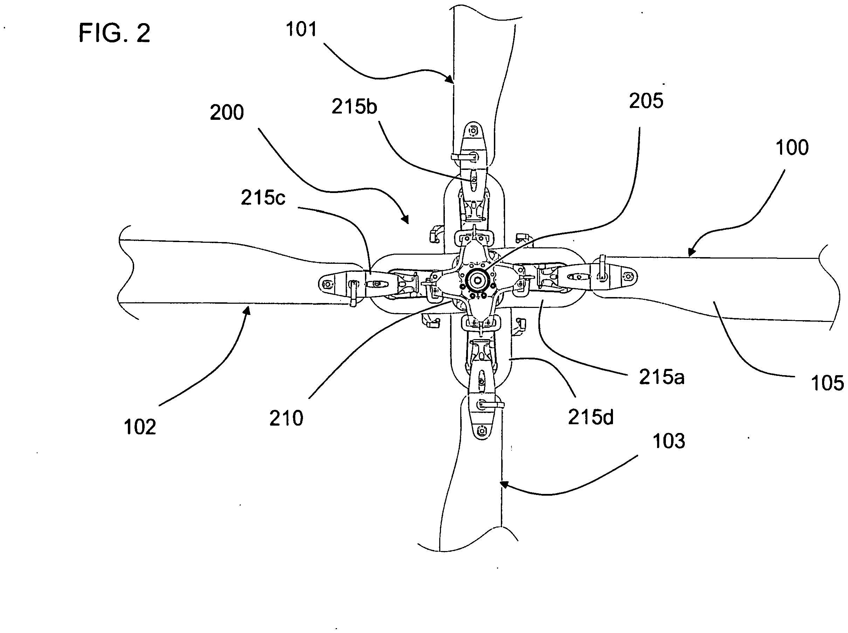

The inboard end 130 includes an attachment device 140 configured to mount the body 105 of the rotor blade 100 to a rotor mast 205 of a helicopter (*see* FIG. 2). Specifically, the attachment device 140 includes a first and a second generally parallel arm 145a, 145b that are each provided with cylindrical openings 150a, 150b.

FIG. 2 shows a top view of several substantially identical rotor blades 100, 101, 102, 103 mounted to the rotor mast assembly 200 of a helicopter . To avoid redundancy, the discussion herein will focus on the attachment of the rotor blade 100, since the attachments of the other rotor blades 101, 102 and 103 to the rotor mast assembly 200 are substantially identical.

Rotor mast assembly 200 includes the rotor mast 205, a rotor hub 210, and a plurality of blade receiving portions 215a-d. The rotor hub 210 is slideably mounted to the rotor mast 205 and includes at a periphery thereof the plurality of blade receiving portions 215a-d. As can be seen in FIG. 2, generally parallel arms 145a, 145b of the rotor blade 100 are engaged in the blade receiving portion 215a. The rotor blade 100 is secured to the rotor mast assembly 200 via an attachment mechanism (not shown in FIG. 2).

The rotor mast assembly 200 is configured to receive four substantially identical rotor blades. It will be appreciated that the rotor mast assembly 200 may be configured to receive additional or fewer rotor blades in other embodiments. FIG. 6 shows an example of a tail rotor blade including two blades.

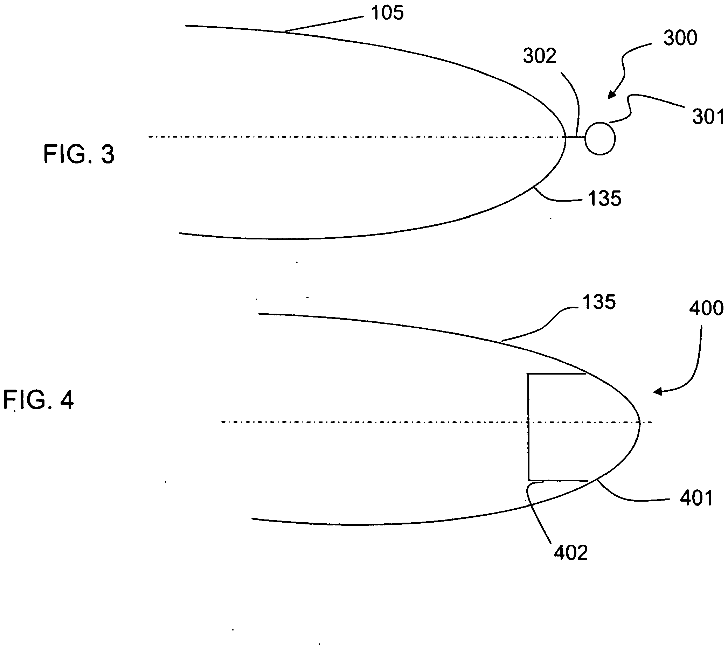

Referring now to FIG. 3, this figure shows a lighting device 300 mounted to the outboard end or tip of the blade 135. The lighting device 300 includes a housing 301 that is attached to the outboard end 135 with a support 302. In the embodiment of FIG. 3, the housing 301 is arranged on the axis that extends along the longitudinal direction of the blade 100. However, it will be appreciated that the housing device 300 could be attached at a different position. For example, the housing device 300 could be positioned substantially below the body 105 of the blade 100.

FIG. 4 shows a lighting device 400 mounted to the outboard end or tip of the blade 135. The lighting device of FIG. 4 may be similar to that described in FIG. 3 and includes a housing 401 arranged in a recess portion 402 formed within the body 105. This configuration may be preferred over that shown in FIG. 3 as it does not create a drag on the blade. The housing 401 can be secured to the blade 100 during its manufacture. In this implementation, the housing 401 is part of the blade. In another implementation, the housing 401 can be removably engaged within the recess portion 401 formed in the blade.

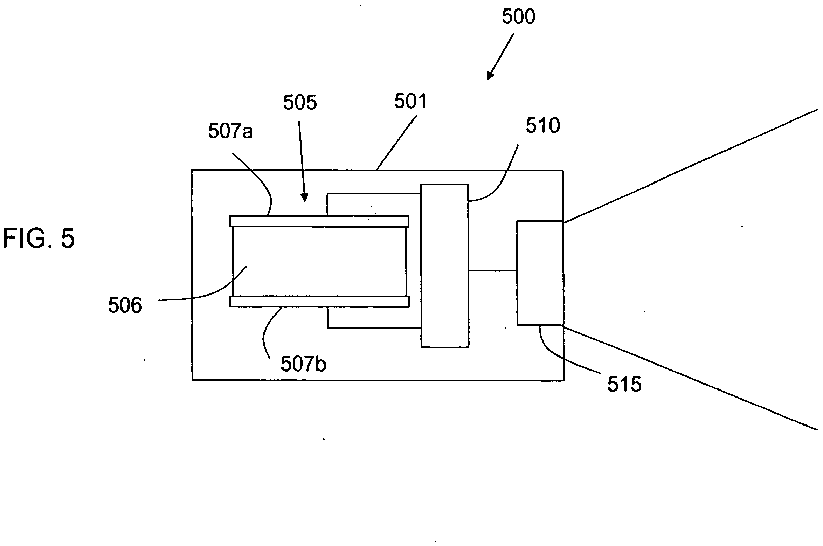

The lighting device shown in FIGS. 3 and 4 is an autonomous lighting device that includes a power source and a lamp. This autonomous lighting device is configured to withstand the high centrifugal force created during rotation of the blades. In one implementation, the autonomous lighting device is configured to withstand centrifugal forces of about 300Gs. FIG. 5 shows a schematic representation of such an autonomous lighting device. The lighting device 500 includes a casing 501 that houses a power source 505, a rectifier circuit 510 and a light emitting diode 515. The casing 501 may be an epoxy casing or may be made of any other material capable of withstanding stress generated during rotation of blade 100.

The power source 505 includes a piezoelectric material 506 sandwiched between two electrodes 507a-b. The power source 505 may be referred to as a piezo electric source. The piezoelectric material 506 may be a crystal of quartz, berlinite (AlPO₄) or gallium orthophosphate (GaPO₄). In one implementation, ceramics with perovskite or tungstenbronze structures (BaTiO₃, SrTiO₃, Pb(ZrTi)O₃, KNbO₃, LiNbO₃, LiTaO₃, BiFeO₃, NaxWO₃, Ba₂NaNb₅O₅, Pb₂KNb₅O₁₅) or polymer materials can be used. When the piezoelectric material 506 is bent or struck due to the vibrations or movements of the blade 100, it becomes electrically polarized which causes a charge production and a voltage at the electrodes 507a-b. The voltage generated at the electrodes 507a-b is then used to power the lamp or light emitting diode 515. A rectifier circuit 510 may be used to adapt the voltage or the intensity of the current supplied to the lamp 515.

The size and type of materials of the piezoelectric material 506 included in power source 505 are selected based on the power needed to power the lamp 515 and on the frequency and amplitudes of the vibrations or movements of the portion of blade 100 where the power source 505 is positioned. Determination of the appropriate location of the piezoelectric material 506 and power source 505 is based on the geometry of the blade, the blade's materials and the operating limits of the helicopter (e.g., speed rotor, power turbine). Thus, in an embodiment, a method of manufacturing a blade includes determining the frequency and amplitude of the vibrations or movements produced by a segment of the blade as a function of its position on the blade and/or the blade's materials and/or the operating limits of the helicopter. Once the frequency and amplitude of each segment of the blade are determined, the method proceeds to selecting the appropriate location, the size and the type of piezoelectric material based on the power needed to power the lamp. In addition, it will be appreciated that the number of lamps powered by the power source 505 may also determine the size and the type of materials. In the embodiment shown in FIG. 5, the power source 505 is configured to power a single lamp. In another embodiment, the power source 505 is configured to power multiple lamps that are arranged at different locations along blade 100.

In FIG. 5, the lamp 515 includes at least one light emitting diode (LED) that has a wide viewing angle of at least about 40°. The LED 515 is configured to be viewed during day and/or night. Examples of LEDs that can be used in an embodiment include super luminosity LEDs having a wide viewing angle. These types of LEDs are configured to produce light intensity of at least 130 mwatts and to output an illumination beam having a radiation wavelength of about, for example, 625 nm with a spectrum radiation bandwidth of about 20 nm. In an embodiment, the LEDs may be chosen to output an illumination beam in a range from about 500 nm to about 650 nm, preferably in a range between about 600 nm and 650 nm.

In FIG. 5, the power source 505, the rectifier circuit 510 and the LED 515 are embedded in a same casing 501. In another configuration, these elements may be arranged at separate locations within or outside the blade. For example, the power source 505 may be arranged at a higher vibration location along blade 100. In this configuration, electrical wires may be arranged along blade 100 to conduct the electrical signal generated by the power source 505 to the rectifier circuit 510. Electrical wires that may be used in one implementation include ribbon conductors or thin tapes with conductive strips embedded between them. Although the lighting device 500 is configured to supply light at the blade's tips of the main rotor, it will be appreciated that the same arrangement could also be made at the blade's tips of the tail rotor.

According to the invention, the electrical power generated by the power source is used to power a lamp that is arranged at a location other than the tip of the blade. This configuration may be desirable in the event the lamp is not adapted to withstand either the centrifugal force generated at the blade's tip or the vibrations or movements of the blade. For example, the lamp may be positioned at a location proximate the rotor shaft. An optic fiber is then be used to relay the light emitted by the lamp to the tip of the blades and/or at other locations on the blade.

The foregoing embodiments have been provided to illustrate the structural and functional principles of the present invention, and are not intended to be limiting. To the contrary, the present invention is defined by the appended claims.

It will be appreciated that the light emitting device may be implemented in any type of rotorcraft such, for example, a conventional helicopter or a tiltrotor aircraft. A tiltrotor aircraft has three modes of operation: airplane mode, helicopter mode and transition mode.

## Claims

1. A rotor blade (100) of a rotorcraft comprising a light emitting device (300, 400, 500) configured to provide light on a rotor blade, the light emitting device including:
a light emitting diode (515) arranged on the rotor blade (100); and
a power source (505) connected to the light emitting diode (515), the power source including a piezo-electric material (506) sandwiched between two electrodes (507a, 507b); and
an optical fiber configured to guide light emitted by the light emitting diode (515, 603) to a desired location in the rotor blade (100);
wherein the piezo-electric material (506) is configured and positioned on the rotor blade (100) to create a voltage between the two electrodes due to vibrations of the rotor blade to power the light emitting diode (515).

2. The rotor blade of claim 1, further comprising ribbon conductors arranged on a surface of the rotor blade (100), the ribbon conductors configured to transmit an electric current generated by the power source (505) to the light emitting diode (515).

3. The rotor blade of claim 1, wherein the light emitting device (300, 400, 500) is removably engaged at the tip of the rotor blade.

4. The rotor blade of claim 1, wherein the light emitting device (300, 400, 500) is configured to withstand centrifugal force of about 300Gs.

5. The rotor blade of claim 1, further comprising a rectifier circuit (510) configured to adjust the voltage supplied to the light emitting diode (515).

6. The rotor blade of claim 5, wherein the light emitting diode (515), the power source (505) and the rectifier circuit (510) are arranged in a casing .

7. The rotor blade of claim 1, wherein the piezo-electric material (506) is arranged at a location on the rotor blade (100) that generates high vibrations.

8. The rotor blade of claim 1, wherein the piezo-electric material includes quartz, berlinite (AlPO₄), gallium orthophosphate (GaPO₄), perovskite or a polymer material.

9. A rotorcraft comprising the rotor blade (100) of claim 1.

10. The rotorcraft of claim 9, wherein the rotorcraft is a helicopter or a tiltrotor aircraft.

## Patentansprüche

1. Rotorblatt (100) eines Drehflüglers, umfassend: eine Licht emittierende Vorrichtung (300, 400, 500), die ausgestaltet ist, um Licht an einem Rotorblatt vorzusehen, wobei die Licht emittierende Vorrichtung einschließt:
- eine an dem Rotorblatt (100) angeordnete Leuchtdiode (515) und
- eine mit der Leuchtdiode (515) verbundene Stromquelle (505), wobei die Stromquelle ein piezoelektrisches Material (506) einschließt, das zwischen zwei Elektroden (507a, 507b) angebracht ist; und
- eine optische Faser, die ausgestaltet ist, um von der Leuchtdiode (515, 603) emittiertes Licht an eine gewünschte Stelle in dem Rotorblatt (100) zu führen;
wobei das piezoelektrische Material (506) ausgestaltet und auf dem Rotorblatt (100) positioniert ist, um aufgrund von Vibrationen des Rotorblatts eine Spannung zwischen den beiden Elektroden zu erzeugen, um die Leuchtdiode (515) mit Strom zu versorgen.

2. Rotorblatt nach Anspruch 1, weiterhin umfassend: Flachbandleiter, die auf einer Fläche des Rotorblatts (100) angeordnet sind, wobei die Flachbandleiter ausgestaltet sind, um durch die Stromquelle (505) erzeugten elektrischen Strom an die Leuchtdiode (515) zu übertragen.

3. Rotorblatt nach Anspruch 1, wobei die Leuchtdiode (300, 400, 500) in entfernbarem Eingriff mit der Rotorblattspitze ist.

4. Rotorblatt nach Anspruch 1, wobei die Leuchtdiode (300, 400, 500) ausgestaltet ist, um einer Zentrifugalkraft von ca. 300Gs standzuhalten.

5. Rotorblatt nach Anspruch 1, weiterhin umfassend eine Gleichrichterschaltung (510), die ausgestaltet ist, um die an die Leuchtdiode (515) gelieferte Spannung zu regeln.

6. Rotorblatt nach Anspruch 5, wobei die Leuchtdiode (515), die Stromquelle (505) und die Gleichrichterschaltung (510) in einem Gehäuse angeordnet sind.

7. Rotorblatt nach Anspruch 1, wobei das piezoelektrische Material (506) an einer Stelle an dem Rotorblatt (100) angeordnet ist, an der starke Vibrationen erzeugt werden.

8. Rotorblatt nach Anspruch 1, wobei das piezoelektrische Material Quarz, Berlinit (AlPO₄), Galliumorthophosphat (GaP₄), Perowskit oder ein Polymermaterial einschließt.

9. Drehflügler, der das Rotorblatt (100) nach Anspruch 1 umfasst.

10. Drehflügler nach Anspruch 9, wobei es sich bei dem Drehflügler um einen Hubschrauber oder ein Kipprotor-Flugzeug handelt.

## Revendications

1. Pale de rotor (100) d'un giravion, comprenant un dispositif émetteur de lumière (300, 400, 500) configuré pour fournir une lumière sur une pale de rotor, le dispositif émetteur de lumière comprenant :
une diode électroluminescente (515) disposée sur la pale de rotor (100) ; et
une source d'énergie (505) connectée à la diode électroluminescente (515), la source d'énergie comprenant un matériau piézoélectrique (506) intercalé entre deux électrodes (507a, 507b) ; et
une fibre optique configurée pour guider la lumière émise par la diode électroluminescente (515, 603) à un emplacement souhaité sur la pale de rotor (100) ;
le matériau piézoélectrique (506) étant configuré et positionné sur la pale de rotor (100) pour créer une tension entre les deux électrodes en raison des vibrations de la pale de rotor afin d'alimenter en énergie la diode électroluminescente (515).

2. Pale de rotor selon la revendication 1, comprenant en outre des câbles plats disposés sur une surface de la pale de rotor (100), les câbles plats étant configurés pour transmettre un courant électrique généré par la source d'énergie (505) à la diode électroluminescente (515).

3. Pale de rotor selon la revendication 1, dans laquelle le dispositif émetteur de lumière (300, 400, 500) est en prise de manière amovible avec l'extrémité de la pale de rotor.

4. Pale de rotor selon la revendication 1, dans laquelle le dispositif émetteur de lumière (300, 400, 500) est configuré pour résister à une force centrifuge d'environ 300 G.

5. Pale de rotor selon la revendication 1, comprenant en outre un circuit redresseur (510) configuré pour ajuster la tension fournie à la diode électroluminescente (515).

6. Pale de rotor selon la revendication 5, dans laquelle la diode électroluminescente (515), la source d'énergie (505) et le circuit redresseur (510) sont disposés dans un boîtier.

7. Pale de rotor selon la revendication 1, dans laquelle le matériau piézoélectrique (506) est disposé à un emplacement sur la pale de rotor (100) qui génère de fortes vibrations.

8. Pale de rotor selon la revendication 1, dans laquelle le matériau piézoélectrique comprend du quartz, de la berlinite (AlPO₄), de l'orthophosphate de gallium (GaPO₄), de la pérovskite ou un matériau polymère.

9. Giravion comprenant la pale de rotor (100) selon la revendication 1.

10. Giravion selon la revendication 9, dans lequel le giravion est un hélicoptère ou un aéronef à rotors basculants.
